# FASCICULE DE BREVET EUROPEEN

(11) **EP 2 861 493 B1**
(45) Date de publication et mention de la délivrance du brevet: **17.10.2018**
(21) Numéro de dépôt: 13733392.8
(22) Date de dépôt: 12.06.2013
(51) Int. Cl.: B64D 35/08

(54) **PROCÉDÉ ET ARCHITECTURE DE TRANSFERT D'ÉNERGIE OPTIMISÉ ENTRE UN MOTEUR AUXILIAIRE DE PUISSANCE ET LES MOTEURS PRINCIPAUX D'UN HELICOPTERE**
METHODE UND ANORDNUNG ZUR ENERGIEÜBERTRAGUNG ZWISCHEN EINEM HAUPT- UND EINEM HILFSANTRIEB IN EINEM HUBSCHRAUBER
METHOD AND ARCHITECTURE FOR TRANSFERRING ENERGY BETWEEN A PRINCIPAL AND AN AUXILIARY ENGINE IN AN HELICOPTER

(30) Priorité: 15.06.2012 FR 1255599
(43) Date de publication de la demande: 22.04.2015
(73) Titulaire: Safran Helicopter Engines, 64510 Bordes (FR); Safran Power Units, 31200 Toulouse (FR)
(72) Inventeur: DAURIAC, Pascal, F-64110 Rontignon (FR); BEDRINE, Olivier, F-64290 Bosdarros (FR); MARCONI, Patrick, F-64110 Gelos (FR); RIDEAU, Jean-François, F-31170 Tournefeuille (FR)
(74) Mandataire: Gevers & Orès
(86) Numéro de dépôt international: PCT/FR2013/051376
(87) Numéro de publication internationale: WO 2014/009620

(56) Documents cités:
- EP-A1- 0 490 755
- EP-A2- 2 452 876
- WO-A1-2012/004516
- GB-A- 2 460 246
- US-A- 3 963 372
- US-A- 5 054 716

## Description

### DOMAINE TECHNIQUE

L'invention concerne un procédé de transfert d'énergie optimisé entre un moteur auxiliaire de puissance, en particulier un groupe auxiliaire de puissance connu sous l'appellation abrégée APU (initiales de « Auxiliary Power Unit » en terminologie anglaise), et les moteurs principaux d'un hélicoptère, ainsi qu'une architecture de mise en oeuvre de ce procédé.

Les hélicoptères sont équipés de moteurs principaux qui servent à la propulsion et parfois d'un moteur auxiliaire. Actuellement, les moteurs auxiliaires sont des groupes APU, qui sont des petites turbines à gaz, fournissent de la puissance non propulsive - électrique, mécanique, hydraulique et/ou pneumatique - dans les phases de vol où les moteurs principaux ne sont pas en mesure de le faire : au sol, dans les phases de transition (décollage, atterrissage), dans les phases de recherche, etc.

Lorsque les moteurs principaux sont opérationnels, le groupe APU est éteint. En régime de panne d'un moteur (en abrégé OEI, initiales de « One Engine Inoperative » en terminologie anglaise), une accélération rapide est demandée au moteur sain. Le document GB 2 460 246 dévoile un exemple d'un moteur auxiliaire pour aider un rotor dans le cas d'autorotation à basse hauteur.

Les groupes APU restent donc éteints en vol et représentent alors une charge inutile. L'invention se rapporte à l'optimisation de l'utilisation des groupes APU afin de rentabiliser leur présence.

### ÉTAT DE LA TECHNIQUE

Un moteur comporte classiquement, de base, un générateur de gaz formé d'un ensemble compresseur - chambre de combustion - turbine, disposé entre une entrée d'air et une tuyère d'échappement. En fonctionnement, le carburant est injecté dans la chambre et la combustion du mélange carburant/air fournit des gaz énergétiques. Ces gaz chauds sont détendus dans la turbine qui entraîne mécaniquement le compresseur via un arbre haute pression (HP en abrégé). L'arbre d'entraînement transmet également la puissance disponible aux équipements et accessoires consommateurs d'énergie. Ce type d'architecture et de fonctionnement vaut aussi bien pour les moteurs principaux que pour les groupes APU.

Pour les moteurs principaux, la puissance est transmise au rotor de l'hélicoptère via une boîte de réduction. Les moteurs modernes disposent également d'une turbine libre de puissance d'entraînement de la boîte de réduction. Les gaz de combustion subissent une seconde détente dans la turbine libre. Sur l'arbre de cette turbine libre, la boîte de réduction entraîne, outre le rotor, des équipements consommateurs d'énergie : pompe, alternateur et/ou compresseur de charge.

Dans une architecture simplifiée sans turbine libre, la boîte de réduction (ou directement les équipement dans la solution la plus simple) est montée sur l'arbre HP du générateur de gaz. Pour les groupes APU, la turbine entraîne les accessoires consommateurs via une boîte de transmission montée sur l'arbre.

De manière générale, les groupes APU restent une charge inutile en vol et la capacité de fourniture de puissance par l'ensemble de la motorisation disponible n'est pas optimisée.

### EXPOSÉ DE L'INVENTION

L'invention vise à optimiser l'ensemble de la motorisation disponible sur un hélicoptère par l'utilisation d'un moteur auxiliaire pour apporter de l'énergie aux équipements et accessoires de l'hélicoptère. Par moteur auxiliaire, on entend tout système thermique qui permet d'apporter de la puissance, comme un groupe APU, mais également de manière générale une turbine à gaz ou un moteur thermique, par exemple un moteur diesel, ou encore une pile à combustible.

Plus précisément, la présente invention a pour objet un procédé de transfert d'énergie optimisé entre un moteur auxiliaire, agencé pour fournir de l'énergie non propulsive, et les moteurs principaux d'un hélicoptère consistant à apporter toute la puissance disponible générée par le moteur auxiliaire vers les moteurs principaux par connexion de l'arbre d'entraînement du moteur auxiliaire à l'arbre d'entraînement et/ou de transmission de puissance de chaque moteur principal via au moins une adaptation de puissance, dans des phases de vol où la puissance générée par le moteur auxiliaire est ajoutée à la puissance générée par au moins un moteur principal. Dans ces conditions, le moteur auxiliaire peut participer à une augmentation de la puissance propulsive et/ou à la fourniture de puissance non propulsive. L'adaptation de puissance est une adaptation mécanique ou une conversion de puissance mécanique en puissance électrique, pneumatique et/ou hydraulique.

Selon des modes de mise en oeuvre préférés :
- la connexion de l'arbre de transmission du moteur auxiliaire à au moins un moteur principal est réalisée sur l'un des arbres de ce moteur principal choisi parmi l'arbre d'entraînement d'une architecture de moteur à turbine liée, l'arbre d'entraînement du générateur de gaz et/ou l'arbre de transmission de puissance d'une architecture de moteur à turbine libre ;
- l'apport de puissance du moteur auxiliaire est ajusté entre les moteurs principaux pour tendre vers un équilibre de puissance entre ces moteurs par compensation du fonctionnement asymétrique desdits moteurs dans le cas où cette asymétrie est provoquée involontairement par défaillance partielle d'un des moteurs, et par apport sur le moteur sollicitée en cas d'asymétrie volontaire en fonction des phases de mission de l'hélicoptère ;
- l'apport de puissance mécanique généré par le moteur auxiliaire est converti en une énergie choisie entre une énergie de nature électrique, pneumatique, mécanique et/ou hydraulique ;
- le moteur auxiliaire étant une turbine à gaz, un échange thermique est réalisé entre les gaz d'échappement de chaque moteur principal et l'air en sortie de compression du moteur auxiliaire afin de récupérer au moins en partie l'énergie thermique des gaz d'échappement et de réinjecter l'air ainsi réchauffé en amont de la combustion des gaz du moteur auxiliaire ;
- le moteur auxiliaire fonctionne en chambre éteinte, sans apport de carburant, lorsque les gaz d'échappement des moteurs principaux apportent une énergie thermique suffisante au moteur auxiliaire pour servir de source chaude.

L'invention se rapporte également à une architecture de transfert d'énergie optimisé entre un moteur auxiliaire, agencé pour fournir de l'énergie non propulsive, et les moteurs principaux d'un hélicoptère, apte à mettre en oeuvre le procédé ci-dessus. Les moteurs principaux comportent un générateur de gaz en liaison avec des boîtes de réduction et accessoire de prises de puissance mécanique, électrique et/ou hydraulique, et en liaison avec, pour le moteur auxiliaire, au moins un organe de conversion de puissance. Dans cette architecture, l'organe de conversion de puissance du moteur auxiliaire est relié aux équipements et accessoires soit directement soit à travers la boite de réduction et/ou la boîte accessoire des moteurs principaux.

Selon des modes de réalisation particuliers :
- les moteurs principaux étant équipés d'une turbine libre montée sur un arbre de transmission de puissance, la boîte de réduction est en prise sur l'arbre de transmission de puissance de la turbine libre ;
- l'organe de conversion de puissance du moteur auxiliaire est choisi parmi une génératrice électrique de transmission de puissance électrique, un compresseur de charge de transmission de puissance pneumatique, et une boîte de transmission de puissance mécanique ou hydraulique ;
- les moteurs principaux étant équipés d'une tuyère d'échappement des gaz et d'un échangeur thermique de récupération intégré à cette tuyère, le moteur auxiliaire étant une turbine à gaz équipée d'un générateur de gaz - constitué d'un compresseur, d'une chambre de combustion et d'une turbine montés sur un arbre d'entraînement - est relié en sortie du compresseur d'air à l'échangeur thermique de la tuyère d'échappement des moteurs principaux et cet échangeur est couplé, en sortie, en amont de la chambre de combustion du générateur de gaz du moteur auxiliaire ;
- le moteur auxiliaire et les moteurs principaux disposent d'unités de commande numérique de type FADEC (initiales de « Full Autority Digital Engine Control » en terminologie anglaise) qui transmettent des informations relatives aux couples et vitesses des arbres de transmission de puissance, ces informations étant centralisées au niveau d'une unité de contrôle de vol afin d'ajuster la transmission de puissance du moteur auxiliaire aux moteurs principaux en fonction de l'état de fonctionnement de chacun des moteurs principaux par rapport à des valeurs de couples et de vitesses de consigne.

### BRÈVE DESCRIPTION DES FIGURES

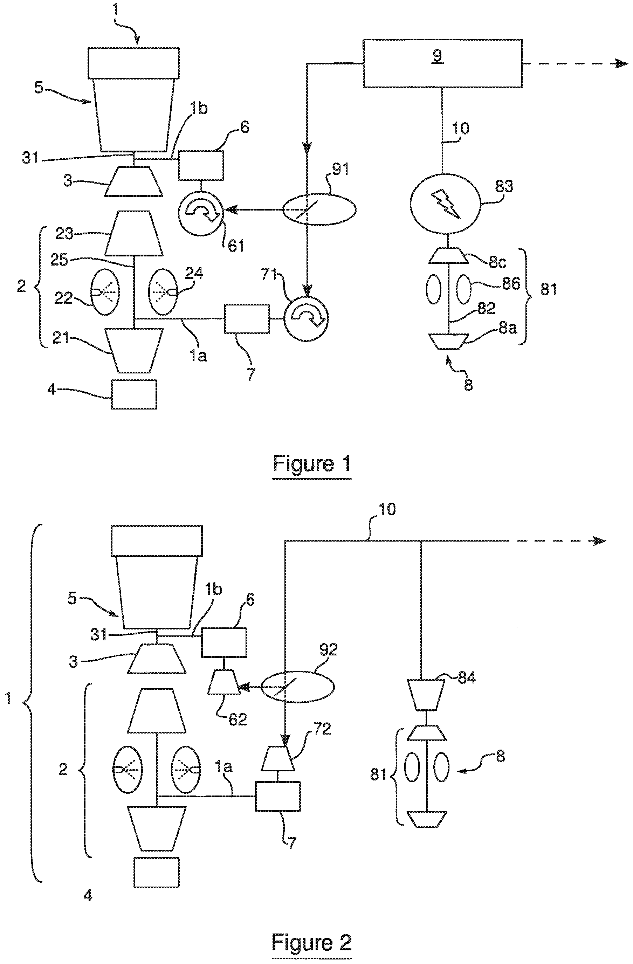

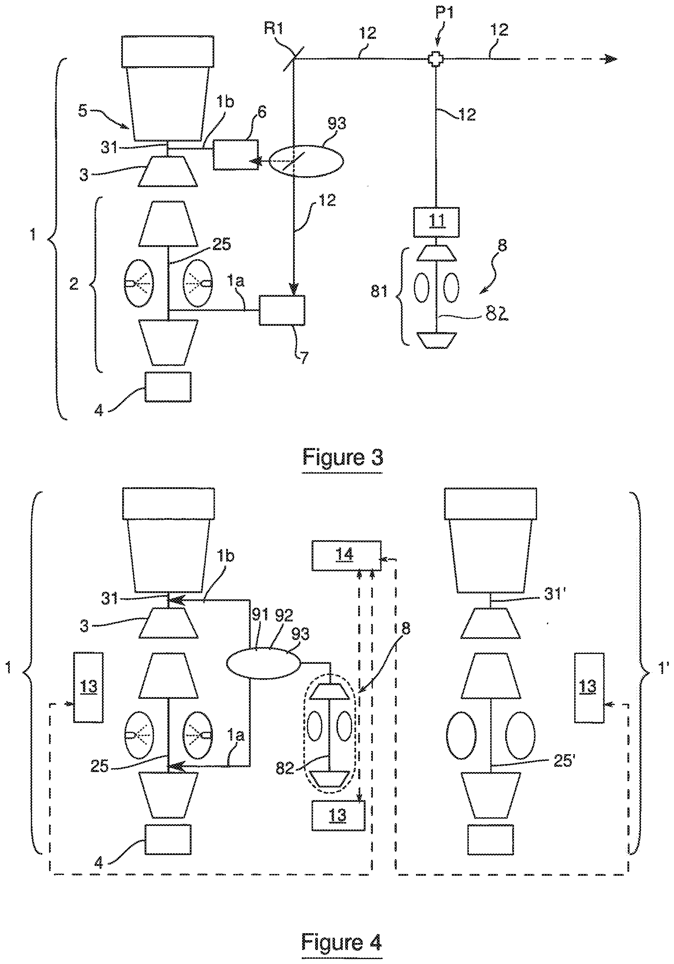

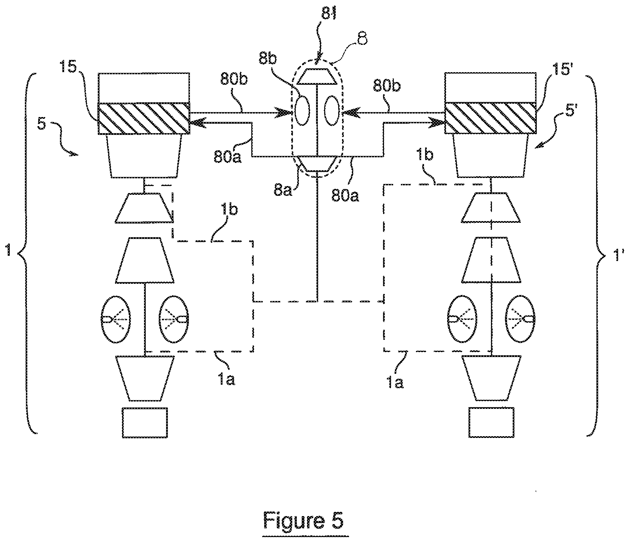

D'autres aspects, caractéristiques et avantages de l'invention apparaîtront dans la description non limitative qui suit, relative à des modes de réalisation particuliers, en référence aux dessins annexés qui représentent, respectivement :
- en figure 1, un schéma d'architecture de transfert d'énergie selon l'invention dans lequel un apport d'énergie d'un groupe APU vers un moteur principal d'hélicoptère se fait via un couplage électrique ;
- en figure 2, un schéma d'architecture selon l'invention dans lequel un apport d'énergie du groupe APU vers un moteur principal se fait via un couplage pneumatique ;
- en figure 3, un schéma d'architecture selon l'invention dans lequel un apport d'énergie du groupe APU vers un moteur principal se fait via un couplage mécanique ou hydraulique ;
- en figure 4, un schéma d'architecture de couplage APU /moteurs principaux selon l'invention dans le cas d'un fonctionnement asymétrique des moteurs ; et
- en figure 5, un schéma d'architecture selon l'invention dans lequel un apport d'énergie des moteurs principaux vers le groupe APU est réalisé par un échangeur thermique à l'échappement.

### DESCRIPTION DETAILLEE DE MODES DE REALISATION

Dans toutes les figures, les éléments identiques ou semblables, exerçant une même fonction, sont identifiés avec des signes de référence identiques ou semblables.

En référence à la figure 1, le schéma d'architecture selon l'invention est simplifié en n'illustrant qu'un seul des deux moteurs principaux d'un hélicoptère, l'autre moteur étant identique et relié symétriquement de façon similaire au groupe APU. Les moteurs principaux, tel que le moteur principal 1 représenté, comportent un générateur de gaz 2 formé d'un ensemble constitué d'un compresseur 21 couplé à une chambre de combustion 22, elle-même couplée à une turbine 23. Le moteur comporte également une turbine libre 3 entraînant un arbre de transmission de puissance 31. Le générateur de gaz 2 et la turbine libre 3 sont disposés entre une entrée d'air 4 et une tuyère d'échappement des gaz 5.

En fonctionnement, la chambre 22 est alimentée en carburant par des injecteurs 24, dans lesquels de l'air comprimé par le compresseur 21 est également aspiré. La combustion du mélange air - carburant dans la chambre 22 fournit des gaz énergétiques de vélocité élevée. Ces gaz chauds sont détendus d'abord dans la turbine 23 qui entraîne mécaniquement le compresseur 21 via un arbre HP d'entraînement 25, puis dans la turbine libre 3.

Le moteur principal 1 transmet de la puissance mécanique au rotor de l'hélicoptère et à des équipements ou accessoires via une boîte de réduction de vitesse 6, en particulier à un moteur électrique 61 dans l'exemple illustré qui se rapporte à la transmission électrique de puissance. Le moteur 1 transmet également de la puissance mécanique à d'autres équipements ou accessoires à travers une boîte accessoire 7, en particulier à un moteur électrique 71 dans le cadre de l'exemple. Des arbres 1a et 1b de prise mécanique relient les arbres d'entraînement 25 et de transmission 31 aux boîtes 6 et 7.

Le schéma d'architecture de la figure 1 illustre également un groupe APU 8 qui comporte, comme les moteurs principaux, un générateur de gaz 81 comprenant un compresseur 8a, une chambre de combustion 86 et une turbine 8c. L'arbre d'entraînement 82 du générateur de gaz 81 du groupe APU 8 est couplé à une génératrice électrique 83 qui transforme l'énergie mécanique transmise par l'arbre 82 en énergie électrique. Le courant fourni au réseau hélicoptère 9 par le conducteur 10 peut alors être transmis aux équipements ou accessoires électriques montés sur les boîtes de réduction 6 et accessoire 7 du moteur principal 1. Dans l'exemple, les moteurs électriques 61 et/ou 71 sont mis sous tension par leur liaison électrique au réseau 9 alimenté par la génératrice 83 via un boîtier sélecteur 91.

Un autre exemple, illustré par le schéma de la figure 2, se rapporte à la transmission pneumatique de puissance. Dans ce cas, le groupe APU entraîne un compresseur de charge 84 qui génère un débit d'air à une pression suffisante pour alimenter des équipements pneumatiques. Ces équipements sont montés sur les boîtes de réduction 6 et accessoire 7 en liaison mécanique avec le moteur principal 1 via les arbres 1a et 1b. Dans l'exemple, les turbines auxiliaires 62 et 72 de conditionnement d'air montées sur les boîtes de réduction 6 et accessoire 7 sont alimentées par le compresseur de charge 84 via des conduits d'air 20 et un sélecteur pneumatique 92, par exemple une vanne triple voies. L'air sortant des turbines 62 et 72 participent par exemple à la ventilation de la baie moteur regroupant les équipements électroniques de l'ensemble de la motorisation hélicoptère.

Dans un autre exemple illustré par le schéma de la figure 3, une transmission de puissance mécanique ou hydraulique est fournie à travers une boîte de transmission 11 entraînée par le générateur de gaz 81 du groupe APU 8. La boîte de transmission 11 est couplée, via l'arbre d'entraînement 82 et des arbres de transmission 12 couplés par un système de pignons P1, un renvoi R1 et un système à engrenages libérables 93, à la boîte de réduction 6 et/ou à la boîte accessoire 7. Ces boîtes sont également montées sur les arbres d'entraînement 25 et 31 du moteur principal 1. L'énergie fournie par le groupe APU 8 permet d'entraîner en particulier une pompe ou un moteur annexe.

Avantageusement, les organes de conversion de puissance électrique 83, pneumatique 84, hydraulique et/ou pneumatique 11 peuvent être regroupés dans une même boîte de transfert. Un sélecteur commandé par le FADEC du groupe APU (voir la description ci-dessous en référence à la figure 4) et intégré à cette boîte de transfert permet de coupler l'organe de conversion qui fournit le type d'énergie souhaitée. Le FADEC 13 du groupe APU 8 commande aussi, en liaison avec l'unité de contrôle de vol 14 (voir également la description ci-dessous en référence à la figure 4), les connexions en modes « et/ou » des systèmes de sélection 91, 92 et 93 (figures 1 à 3) aux boîtes 6 et 7, reliées aux arbres 31 et 25 du moteur 1 via les arbres de prise 1a et 1b, ou aux équipements tels que les moteurs électriques 61, 71 et les turbines 62, 72.

Le groupe APU contribue ainsi à améliorer le rendement des moteurs principaux et donc à optimiser la densité de puissance de la motorisation embarquée. Il est en fait possible soit d'augmenter les puissances disponibles soit de diminuer les dimensions et masses des moteurs principaux à puissances disponibles égales.

Par ailleurs, les moteurs principaux de l'hélicoptère peuvent fonctionner selon deux modes : en fonctionnement nominal, dans lequel les moteurs principaux fournissent la même puissance, et en fonctionnement asymétrique où l'un des moteurs fournit plus de puissance de manière significative. Ce fonctionnement asymétrique peut se produire lorsque l'un des moteurs est partiellement ou totalement défaillant ou, de manière volontaire, dans une phase particulière de la mission de l'hélicoptère, par exemple dans le cas d'une recherche dans un environnement particulier.

Dans le cas d'un fonctionnement asymétrique involontaire, la puissance fournie par le groupe APU peut être appliquée en priorité au moteur partiellement défaillant afin de rétablir un équilibre dans la propulsion. Dans le cas d'un fonctionnement asymétrique volontaire, la puissance fournie par le groupe APU est appliquée au moteur sollicité afin de le soulager. Dans tous les cas de fonctionnement asymétrique, comme illustré par le schéma de la figure 4, le groupe APU 8 et les moteurs principaux 1 et 1' disposent d'unités de commande numérique 13, de type FADEC, qui transmettent des informations relatives aux couples et vitesses des arbres d'entraînement et de transmission de puissance 25, 25', 31, 31', 82. Ces informations sont centralisées au niveau de l'unité de contrôle de vol 14 afin d'ajuster la transmission de puissance du groupe APU 8 aux moteurs principaux 1, 1' et à leurs équipements via les systèmes de sélection 91, 92, 93 ainsi que les arbres de prise 1a et 1b, en fonction de l'état de fonctionnement de chacun de ces moteurs principaux par rapport à des valeurs de couples et de vitesses de consigne.

Dans le cas d'une panne totale d'un des moteurs, le régime spécial OEI (initiales de « one engine inoperative », c'est-à-dire « un moteur non opérationnel » en terminologie anglaise), la puissance du groupe APU est en priorité dédiée aux tentatives de redémarrage de ce moteur. Dans le cas d'un fonctionnement asymétrique volontaire, la puissance du groupe APU est dédiée prioritairement à soulager le moteur le plus sollicité.

Afin d'optimiser la consommation spécifique de l'ensemble de la motorisation APU/moteurs principaux ou, plus généralement, turbine à gaz/moteurs principaux, une récupération de l'énergie thermique à l'échappement peut être également prévue en combinaison avec l'apport d'énergie du groupe APU sur les moteurs principaux via les arbres de prise 1a et 1b. Comme illustré par le schéma de la figure 5, chaque tuyère d'échappement 5 et 5' des moteurs principaux 1 et 1' intègre d'un échangeur thermique 15, 15'. Ces échangeurs récupèrent, au moins en partie non négligeable, de l'énergie thermique des gaz d'échappement.

Le fluide de récupération d'énergie qui circule dans les échangeurs 15 et 15' est prélevé en sortie du compresseur 8a du groupe APU 8 et est réintroduit juste en amont de sa chambre de combustion 8b. Des conduits 80a et 80b assurent la circulation du fluide entre les échangeurs 15, 15' et le générateur de gaz 81 du groupe APU 8.

Dans ces conditions, à performances égales, l'apport thermique fourni par la combustion du carburant dans le groupe APU peut être diminué car cette diminution est compensée par l'apport thermique provenant des échangeurs 15 et 15'. Le besoin en carburant de l'ensemble de la motorisation est ainsi réduit. Cette diminution de carburant peut intervenir avantageusement pendant des phases de vol stabilisées, par exemple pendant les phases de croisière qui sont en général les phases les plus longues.

Lorsque la récupération d'énergie thermique est particulièrement élevée, il est possible de cesser l'injection de carburant dans la chambre de combustion du groupe APU 8. Dans ce cas, la seule source chaude du groupe APU provient des gaz d'échappement des moteurs principaux 1 et 1' via les échangeurs 15 et 15'. L'optimisation énergétique de l'ensemble de la motorisation est alors maximisée.

L'invention n'est pas limitée aux exemples décrits et représentés.

Il est par exemple possible d'appliquer l'invention aux moteurs principaux à turbine liée en couplant l'arbre d'entraînement du groupe APU ou, plus généralement d'un moteur auxiliaire, aux équipements et accessoires liés directement aux arbres d'entraînement des moteurs principaux à turbines liées, ou via des boîtes de réduction et/ou accessoire. La portée de la terminologie « moteur auxiliaire » s'étend aux moteurs de technologie différente de celle d'une turbine à gaz (par exemple : moteur diesel, pile à combustible, etc.).

## Revendications

1. Procédé de transfert d'énergie optimisé d'un moteur auxiliaire (8) vers les moteurs principaux (1, 1') d'un hélicoptère comprenant des moteurs principaux agencés pour fournir de l'énergie propulsive et un moteur auxiliaire agencé pour fournir de l'énergie non propulsive, **caractérisé en ce qu'**il consiste dans certaines phases de vol, à transmettre la puissance générée par le moteur auxiliaire (8) aux moteurs principaux (1, 1') par connexion de l'arbre d'entrainement (82) du moteur auxiliaire (8) à au moins un arbre d'entraînement (25, 25') et/ou de transmission de puissance (31, 31') d'au moins un moteur principal (1, 1') via au moins une adaptation de puissance (83, 84, 11).

2. Procédé de transfert d'énergie selon la revendication 1, dans lequel la connexion de l'arbre d'entraînement (82) du moteur auxiliaire (8) à au moins un moteur principal (1, 1') est réalisée sur l'un des arbres de ce moteur principal choisi parmi l'arbre d'entraînement d'une architecture de moteur à turbine liée, l'arbre d'entraînement (25, 25') du générateur de gaz (81) et/ou l'arbre de transmission de puissance (31, 31') d'une architecture de moteur à turbine libre.

3. Procédé de transfert d'énergie selon la revendication 1, dans lequel l'apport de puissance du moteur auxiliaire (8) est ajusté entre les moteurs principaux (1, 1') pour tendre vers un équilibre de puissance entre ces moteurs (1, 1') par compensation du fonctionnement asymétrique desdits moteurs (1, 1') dans le cas où cette asymétrie est provoquée involontairement par défaillance partielle d'un des moteurs, et par apport sur le moteur sollicitée en cas d'asymétrie volontaire en fonction des phases de mission de l'hélicoptère.

4. Procédé de transfert d'énergie selon l'une quelconque des revendications 1 à 3, dans lequel l'apport de puissance mécanique générée par le moteur auxiliaire (8) est converti en une énergie choisie entre une énergie de nature électrique, pneumatique, mécanique et/ou hydraulique.

5. Procédé de transfert d'énergie selon la revendication 4, dans lequel, le moteur auxiliaire étant une turbine à gaz, un échange thermique (15, 15') est réalisé entre les gaz d'échappement de chaque moteur principal (1, 1') et l'air en sortie de compression (8a) du moteur auxiliaire (8) afin de récupérer au moins en partie l'énergie thermique des gaz d'échappement et de réinjecter l'air ainsi réchauffé en amont de la combustion des gaz (8b) du moteur auxiliaire (8).

6. Procédé de transfert d'énergie selon la revendication précédente, dans lequel le moteur auxiliaire (8) fonctionne en chambre éteinte, sans apport de carburant, lorsque les gaz d'échappement des moteurs principaux apportent une énergie thermique suffisante au moteur auxiliaire (8) pour servir de source chaude.

7. Architecture de transfert d'énergie optimisé d'un moteur auxiliaire de puissance, agencé pour fournir de l'énergie non propulsive, vers les moteurs principaux d'un hélicoptère, apte à mettre en oeuvre le procédé selon l'une des revendications précédentes, ladite architecture comprenant un moteur auxiliaire (8), et des moteurs principaux (1, 1') , **caractérisé en ce que** les moteurs principaux (1, 1') comportent un générateur de gaz (2) en liaison avec des boîtes de réduction (6) et des boîtes accessoires (7) de prises de puissance mécanique, électrique et/ou hydraulique, et en liaison avec, pour le moteur auxiliaire (8), au moins à un organe de conversion de puissance (83, 84, 11), et **en ce que** l'organe de conversion de puissance (83, 84, 11) du moteur auxiliaire (8) est relié aux équipements et accessoires (61, 71 ; 62, 72) soit directement soit à travers la boite de réduction (6) et/ou la boîte accessoire (7) des moteurs principaux (1, 1') par l'intermédiaire d'un boîtier sélectif (91, 92, 93).

8. Architecture de transfert d'énergie selon la revendication précédente, dans laquelle les moteurs principaux (1, 1') étant équipés d'une turbine libre (3) montée sur un arbre de transmission de puissance (31, 31'), la boîte de réduction (6) est en prise sur l'arbre de transmission de puissance (31, 31') de la turbine libre (3).

9. Architecture de transfert d'énergie selon la revendication précédente, dans laquelle les moteurs principaux (1, 1') étant équipés d'une tuyère d'échappement des gaz (5, 5') et d'un échangeur thermique de récupération (15, 15') intégré à cette tuyère (5, 5'), le moteur auxiliaire (8) étant une turbine à gaz équipée d'un générateur de gaz (81) - constitué d'un compresseur (8a), d'une chambre de combustion (8b) et d'une turbine (8c) montés sur un arbre d'entraînement (82) - est relié en sortie du compresseur d'air (8a) à l'échangeur thermique (15, 15') de la tuyère d'échappement (5, 5') des moteurs principaux (1, 1') et cet échangeur (15, 15') est couplé, en sortie, en amont de la chambre de combustion (8b) du générateur de gaz (81) du moteur auxiliaire (8).

10. Architecture de transfert d'énergie selon l'une des revendications 7 à 9, dans laquelle le moteur auxiliaire (8) et les moteurs principaux (1, 1') disposent d'unités de commande numérique de type FADEC (13, 13') qui transmettent des informations relatives aux couples et vitesses des arbres d'entraînement (82) et de transmission de puissance (31, 31'), ces informations étant centralisées au niveau d'une unité de contrôle de vol (14) afin d'ajuster la transmission de puissance du moteur auxiliaire (8) aux moteurs principaux (1, 1') en fonction de l'état de fonctionnement de chacun des moteurs principaux (1, 1') par rapport à des valeurs de couples et de vitesses de consigne.

## Patentansprüche

1. Verfahren zur optimierten Energieübertragung von einem Hilfsmotor (8) zu den Hauptmotoren (1, 1') eines Hubschraubers, umfassend Hauptmotoren, die angeordnet sind zum Bereitstellen von Antriebsenergie, und einen Hilfsmotor, der angeordnet ist zum Bereitstellen von Nichtantriebsenergie, **dadurch gekennzeichnet, dass** es in bestimmten Flugphasen darin besteht, die vom Hilfsmotor (8) erzeugte Kraft auf die Hauptmotoren (1, 1') zu übertragen, indem die Antriebswelle (82) des Hilfsmotors (8) mit mindestens einer Antriebswelle (25, 25') und/oder Kraftübertragung (31, 31') mindestens eines Hauptmotors (1, 1') über mindestens eine Kraftanpassung (83, 84, 11) verbunden wird.

2. Verfahren zur Energieübertragung nach Anspruch 1, wobei die Verbindung der Antriebswelle (82) des Hilfsmotors (8) mit mindestens einem Hauptmotor (1, 1') auf einer der Wellen dieses Hauptmotors, ausgewählt aus der Antriebswelle einer verbundenen Turbinentriebwerkarchitektur, der Antriebswelle (25, 25') des Gasgenerators (81) und/oder der Kraftübertragungswelle (31, 31') einer freien Turbinentriebwerkarchitektur, durchgeführt wird.

3. Verfahren zur Energieübertragung nach Anspruch 1, wobei die Kraftzufuhr des Hilfsmotors (8) zwischen den Hauptmotoren (1, 1') eingestellt wird, um einen Kraftausgleich zwischen diesen Motoren (1, 1') durch Kompensation des asymmetrischen Betriebs der Motoren (1, 1') zu erreichen, wenn diese Asymmetrie unwillkürlich durch teilweisen Ausfall eines der Motoren verursacht wird, und durch Zufuhr an den belasteten Motor im Falle von willkürlicher Asymmetrie in Abhängigkeit von den Einsatzphasen des Hubschraubers.

4. Verfahren zur Energieübertragung nach einem der Ansprüche 1 bis 3, wobei die von dem Hilfsmotor (8) erzeugte mechanische Kraftzufuhr in eine aus elektrischer, pneumatischer, mechanischer und/oder hydraulischer Energie ausgewählte Energie umgewandelt wird.

5. Verfahren zur Energieübertragung nach Anspruch 4, wobei der Hilfsmotor eine Gasturbine ist, wobei ein Wärmeaustausch (15, 15') zwischen den Abgasen jedes Hauptmotors (1, 1') und der Luft am Verdichtungsausgang (8a) des Hilfsmotors (8) durchgeführt wird, um mindestens teilweise die Wärmeenergie der Abgase zurückzugewinnen und die so erwärmte Luft vor der Verbrennung der Gase (8b) des Hilfsmotors (8) wieder einzuspritzen.

6. Verfahren zur Energieübertragung nach dem vorstehenden Anspruch, wobei der Hilfsmotor (8) in einer abgeschalteten Kammer ohne Brennstoffzufuhr arbeitet, wenn die Abgase der Hauptmotoren eine ausreichende Wärmeenergie an den Hilfsmotor (8) zuführen, um als Wärmequelle zu dienen.

7. Architektur zur optimierten Energieübertragung eines Hilfskraftmotors, der so angeordnet ist, dass er den Hauptmotoren eines Hubschraubers die Nichtantriebsenergie bereitstellt, der in der Lage ist, das Verfahren nach einem der vorstehenden Ansprüche auszuführen, wobei die Architektur einen Hilfsmotor (8) und Hauptmotoren (1, 1') umfasst, **dadurch gekennzeichnet, dass** die Hauptmotoren (1, 1') einen Gasgenerator (2) in Verbindung mit Untersetzungsgetrieben (6) und Nebengetrieben (7) für mechanische, elektrische und/oder hydraulische Abtriebe und in Verbindung mit mindestens einem Kraftumwandlungsglied (83, 84, 11) für den Hilfsmotor (8) beinhalten, und dadurch, dass das Kraftumwandlungsglied (83, 84, 11) des Hilfsmotors (8) mit den Ausstattungen und Zubehören (61, 71 ; 62, 72) verbunden ist, entweder direkt oder über das Untersetzungsgetriebe (6) und/oder das Nebengetriebe (7) der Hauptmotoren (1, 1') über ein selektives Gehäuse (91, 92, 93).

8. Architektur zur Energieübertragung nach dem vorstehenden Anspruch, wobei die Hauptmotoren (1, 1') mit einer auf einer Kraftübertragungswelle (31, 31') montierten freien Turbine (3) ausgestattet sind, wobei das Untersetzungsgetriebe (6) mit der Kraftübertragungswelle (31, 31') der freien Turbine (3) in Eingriff steht.

9. Architektur zur Energieübertragung nach dem vorstehendem Anspruch, wobei die Hauptmotoren (1, 1') mit einer Abgasdüse (5, 5') und einem in diese Düse (5, 5') integrierten Rückgewinnungswärmetauscher (15, 15') ausgestattet sind, wobei der Hilfsmotor (8) eine mit einem Gasgenerator (81) ausgestattete Gasturbine ist - bestehend aus einem Verdichter (8a), einer Brennkammer (8b) und einer Turbine (8c), die auf einer Antriebswelle (82) montiert sind - am Ausgang des Luftverdichters (8a) mit dem Wärmetauscher (15, 15') der Abgasdüse (5, 5') der Hauptmotoren (1, 1') verbunden ist und dieser Tauscher (15, 15') am Ausgang vor der Brennkammer (8b) des Gasgenerators (81) des Hilfsmotors (8) gekoppelt ist.

10. Architektur zur Energieübertragung nach einem der Ansprüche 7 bis 9, wobei der Hilfsmotor (8) und die Hauptmotoren (1, 1') numerische Steuereinheiten vom Typ FADEC (13, 13') aufweisen, die Informationen bezüglich der Drehmomente und Drehzahlen der Antriebswellen (82) und der Kraftübertragungswellen (31, 31') übertragen, wobei diese Informationen auf dem Niveau einer Flugsteuereinheit (14) zentralisiert sind, um die Kraftübertragung von dem Hilfsmotor (8) zu den Hauptmotoren (1, 1') in Abhängigkeit vom Betriebszustand jedes der Hauptmotoren (1, 1') in Bezug auf Solldrehmomentwerte und Solldrehzahlwerte einzustellen.

## Claims

1. Method for the optimised transfer of energy from an auxiliary engine (8) to the main engines (1, 1') of a helicopter comprising main engines arranged to provide propulsive power and an auxiliary engine arranged to provide non-propulsive power, **characterised in that** it consists, in certain flight phases, in transmitting the power generated by the auxiliary engine (8) to the main engines (1, 1') by connecting the drive shaft (82) of the auxiliary engine (8) to at least one drive shaft (25, 25') and/or power transmission shaft (31, 31') of at least one main engine (1, 1') via at least one power adaptation (83, 84, 11).

2. Method for transferring energy according to claim 1, wherein the drive shaft (82) of the auxiliary engine (8) is connected to at least one main engine (1, 1') on one of the shafts of said main engine selected from the drive shaft of an architecture having a connected-turbine engine, the drive shaft (25, 25') of the gas generator (81) and/or the power transmission shaft (31, 31') of an architecture having a free-turbine engine.

3. Method for transferring energy according to claim 1, wherein the supply of power from the auxiliary engine (8) is adjusted between the main engines (1, 1') in order to tend towards an equilibrium of power between said engines (1, 1') by compensating the asymmetrical operation of said engines (1, 1') if this asymmetry is caused involuntarily by a partial malfunction of one of the engines, and by supply to the loaded motor in the case of voluntary asymmetry, depending on the mission phases of the helicopter.

4. Method for transferring energy according to any of claims 1 to 3, wherein the supply of mechanical power generated by the auxiliary engine (8) is converted into a type of energy selected from energy of an electrical, pneumatic, mechanical and/or hydraulic nature.

5. Method for transferring energy according to claim 4, wherein, since the auxiliary engine is a gas turbine, an exchange of heat (15, 15') takes place between the exhaust gases from each main engine (1, 1') and the compression air (8a) output from the auxiliary engine (8) in order to recover the heat energy from the exhaust gases at least in part and to re-inject the air thus heated upstream of the combustion of the gases (8b) from the auxiliary engine (8).

6. Method for transferring energy according to the preceding claim, wherein the auxiliary engine (8) operates in a switched-off chamber, without any fuel being supplied, when the exhaust gases from the main engines supply sufficient heat energy to the auxiliary engine (8) to serve as a heat source.

7. Architecture for the optimised transfer of energy from an auxiliary power engine, arranged to provide non-propulsive power, to the main engines of a helicopter, capable of implementing the method according to any of the preceding claims, said architecture comprising an auxiliary engine (8) and main engines (1, 1'), **characterised in that** the main engines (1, 1') comprise a gas generator (2) connected to a reduction gearbox (6) and to an accessory gearbox (7) for mechanical, electrical and/or hydraulic power take-off and connected to, for the auxiliary engine (8), at least one power conversion member (83, 84, 11), and **in that** the power conversion member (83, 84, 11) of the auxiliary engine (8) is connected to the equipment and accessories (61, 71; 62, 72) either directly or by the reduction gearbox (6) and/or the accessory gearbox (7) of the main engines (1, 1') by means of a selector gearbox (91, 92, 93).

8. Architecture for transferring energy according to the preceding claim, wherein, since the main engines (1, 1') are equipped with a free turbine (3) mounted on a power transmission shaft (31, 31'), the reduction gearbox (6) is engaged with the power transmission shaft (31, 31') of the free turbine (3).

9. Architecture for transferring energy according to the preceding claim, wherein, the main engines (1, 1') being equipped with a gas exhaust pipe (5, 5') and with a recovery heat exchanger (15, 15') integrated into this pipe (5, 5'), the auxiliary engine (8) being a gas turbine equipped with a gas generator (81) - formed by a compressor (8a), a combustion chamber (8b) and a turbine (8c) which are mounted on a drive shaft (82) - is connected at the outlet of the air compressor (8a) to the heat exchanger (15, 15') of the exhaust pipe (5, 5') of the main engines (1, 1') and this exchanger (15, 15') is coupled, at the outlet, upstream of the combustion chamber (8b) of the gas generator (81) of the auxiliary engine (8).

10. Architecture for transferring energy according to any of claims 7 to 9, wherein the auxiliary engine (8) and the main engines (1, 1') have digital control units (13, 13') of the FADEC type, which transmit information relating to the torques and speeds of the drive shafts (82) and power transmission shafts (31, 31'), this information being centralised in a flight control unit (14) in order to adjust the transmission of power from the auxiliary engine (8) to the main engines (1, 1') depending on the operating state of each of the main engines (1, 1') relative to torque and speed limit values.
